# EUROPEAN PATENT SPECIFICATION

(11) **EP 2 142 482 B1**
(45) Date of publication and mention of the grant of the patent: **29.05.2013**
(21) Application number: 08736799.1
(22) Date of filing: 28.03.2008
(51) Int. Cl.: C03B 7/088, C03B 37/05

(54) **APPARATUS AND METHOD FOR MANUFACTURING MINERAL FIBERS**
VERFAHREN UND VORRICHTUNG ZUR HERSTELLUNG VON MINERALFASERN
APPAREIL ET PROCÉDÉ POUR LA FABRICATION DE FIBRES MINERALES

(30) Priority: 28.03.2007 FI 20070249
(43) Date of publication of application: 13.01.2010
(73) Proprietor: Paroc Oy Ab, 01300 Vantaa (FI)
(72) Inventor: ÅSTRAND, Erik, FI-21600 Parainen (FI); WALLI, Bjarne, FI-21600 Parainen (FI); LAURÉN, Peter, FI-21600 Pargas (FI)
(74) Representative: Turun Patenttitoimisto Oy
(86) International application number: PCT/FI2008/050150
(87) International publication number: WO 2008/116975

(56) References cited:
- EP-A- 0 622 140
- EP-A- 0 754 652
- GB-A- 984 825
- JP-A- 9 048 620
- JP-A- 61 021 924
- US-A- 3 521 663
- US-A- 4 011 070
- US-A- 4 948 411

## Description

The present invention relates to a method and an apparatus for obtaining a stable feed of mineral melt according to the preambles of the claims below.

Mineral wool, such as stone wool, is manufactured by melting mineral rich raw materials, such as diabase, limestone and/or slag in furnaces, for example cupola furnaces. The mineral melt obtained is led out from the melting furnace in the form of a melt jet to a fiberising apparatus, such as a spinning machine, where the melt is formed into mineral fibres.

Different kinds of open cooled trough constructions are nowadays used to feed mineral melt to a fiberising apparatus. The trough end is often formed as a downwards bent lip or snout for improving the flow of the melt out of the trough. It is important that the melt stream, which hits the mantle surface of the first rotor of the fiberising apparatus, hits the intended point on the mantle surface as exactly as possible. The cross section of the melt jet in the horizontal direction should also have a geometrical form which is as circular as possible. In this way fiberising conditions, which are as even as possible, are ensured at the fiberising apparatus. If, for example, the hit point of the melt jet on the mantle surface moves, this immediately affects the fiberising conditions at the first and subsequent rotors. The result may be a deterioration in the fibre quality and/or quantity.

A problem with the existing melt feeding constructions of trough-type has been the fact that the temperature of the melt does not remain constant during feed. The layer of melt, which is closest to the surface of the trough and in contact with it, is cooled faster than the surface layer of the melt. At the end of the trough this leads to variations in the speed of the melt flow, so that the stream is slower near the surface of the trough and faster in the surface layer of the melt. Due to this, the obtained melt jet is not symmetrically circular but its geometry may vary considerably. This leads to an uneven melt feed, which in its turn strongly affects the fiberising conditions at the fiberising apparatus, as was described above.

A change in the capacity of the fiberising apparatus, i.e. in the amount of manufactured fibre, also affects the position and the shape of the melt stream when using a melt feeding trough. The position and form of the melt jet are axially displaced on the mantle surface when the amount of melt is changed. All variations in the amount of melt affect the fiberising apparatus, whereby the fiberising process becomes more labile and the need of adjusting of the process variables increases.

In some cases the melt layer, which is closest to the trough surface, may be cooled so much at the trough end that a hanging solidified melt plug is formed at the end of the downwards bent lip or snout of the melt feeding trough. This naturally disturbs the formation of the melt stream and the melt feed. A burning apparatus may be used, which is arranged behind the snout of the melt feeding trough in order to warm the snout. In this way it is attempted to prevent the formation of the melt plug and minimise its size. The burner however requires energy and makes the process control more difficult. If the flame of the burner is to harsh, the melt feed is disturbed due to the fact that the geometry of the melt jet is changed.

JP 63-021234 presents a melt reservoir with which the melt is fed onto a fiberising apparatus. The melt reservoir comprises a first end whereto melt is added and a second end at a vertical distance from the first end. The second end has a feed hole through which the melt is fed to the first fiberising rotor. In practise it has been found out that this construction may present some drawbacks, which are caused by the melt partially solidifying at the feed hole. Thereby the diameter of the feed hole and consequently the amount of fed melt are decreased.

Therefore, the object of this invention is to provide a method and an apparatus for the feeding of mineral melt, where the above-mentioned disadvantages are minimised.

One object is thereby to provide an apparatus and a method with which melt can be fed uniformly and without problems.

Another object is thereby to provide an apparatus and a method with which the horizontal cross-section of the melt jet can be kept constant or substantially constant.

These objects are attained with a method and an apparatus having the characteristics presented in the independent claims 1 and 7.

Now it has surprisingly been found out that by arranging adjustment means in the second end of the melt reservoir for adjusting the size of the opening of the melt reservoir, the possible reduction in the diameter of the opening, caused by solidified mineral melt, can be compensated. Using adjustment means variations in the fed amount of melt can also be compensated and possible variations in the temperature and viscosity of the melt can be evened out. Compared to conventional trough constructions, the use of a melt reservoir in the feeding of melt brings about a noticeable improvement in the melt feed. When mineral melt is fed through a feed hole, which has been arranged in the bottom of the melt reservoir, the temperature and volume variations of the fed mineral melt are substantially more uniform throughout the entire fed stream, compared to the streams which are produced with conventional melt feeding troughs.

By adjusting the size of the feed hole according to the present invention the geometry of the cross-section of the melt jet may also be improved and the "wandering" of the melt jet during melt feed, i.e. a change of the feed point, may be minimised, even if the amount of fed melt is changed. By using adjustment means it is possible to get the centre of the melt jet to hit on average the same point on the surface of the first fiberising rotor, even if the temperature, composition and/or viscosity of the melt is changed. All this leads to an improved fiberising run at the fiberising apparatus.

The inner volume of the melt reservoir is thus limited by walls, which extend between the first and the second end of the melt reservoir in a vertical direction. During melt feed the melt reservoir contains a certain volume/amount of melt, so that the melt fills the entire feed hole and opening. In other words the feed hole and the opening are substantially filled with mineral melt during feed of melt from the melt reservoir. It is important that air or gas does not come through the feed hole or opening during melt feed, as the air/gas generally disturbs the melt flow, reduces its homogeneity and unity, and possibly leads to cooling of the melt.

It is preferable that the melt reservoir contains such an amount of melt during melt feed that the own weight of the melt in the melt reservoir affects the melt feed in a stabilising manner. A man skilled in the art may with simple trials find the amount of melt which gives a stable and reliable feed. A melt amount of about 5-10 l may often be used.

The melt reservoir is made of a heat resistant material, for example metal, such as stainless steel, usually of conventional construction steel, or of ceramics. If the melt reservoir is made of metal it may be lined with some suitable material, such as fireproof bricks or ceramic tiles, which protect the metal surface from the mineral melt. The walls of the melt reservoir may also be cooled, especially if they are made of metal. The cooling may most simply be arranged by arranging one or more channels or sections in the walls of the melt reservoir, wherein cold water may then be circulated. The melt reservoir may thus have for example double walls, where the cooling medium has been arranged to circulate between the first inner and the second outer wall. If the walls of the melt reservoir are cooled, a separate lining in the reservoir is not necessarily needed. The cooling causes a part of the melt to solidify on the walls and form a coating on them, which functions as a lining.

In some cases the walls of the melt reservoir may be heated, if there is for some reason a risk that the melt would otherwise be cooled too much in the reservoir. If one is, for example, forced to interrupt the melt feed for a time, the melt reservoir may be kept heated so that the mineral melt does not solidify in the reservoir and the surface of the reservoir is kept open. The heating may be arranged for example with a gas burner.

The inside of the melt reservoir may be conically shaped, so that the diameter of its first end is larger that the diameter of its second end. The inner diameter of the conical melt reservoir may be constantly decreasing or it may decrease gradually. The cross-section of the melt reservoir in the horizontal plane may be selected as needed, it may for example be circular, rectangular or oval-shaped.

The second end of the melt reservoir usually lies on a horizontal or substantially horizontal plane and a feed hole has been arranged in the second end of the melt reservoir. The diameter of the feed hole in the second end is usually 20-80 mm, typically 25-65, more typically 30-50 mm. The second end may be limited by a bottom part, through which the feed hole has been arranged. The diameter of the feed hole may vary through the bottom part. The bottom part is usually cooled down, and the cooling may be arranged in a corresponding way as in the walls of the melt reservoir. The bottom part may thus have a double wall structure or it may be provided with circulation channels. The total thickness of the bottom part is usually 70-130 mm. The thickness of the lower wall of the melt reservoir is usually 15-35 mm, the lining layer, e.g. the fireproof bricks, usually has a thickness of 40-60 mm and the thickness of the adjustment means is typically 15-35 mm.

In the second end of the melt reservoir has been arranged an adjustment means for adjusting the size of the opening of the melt reservoir. The size of the opening may preferably be adjusted for example when small variations occur in the melt flow to the melt reservoir. By adjusting the size of the opening the melt volume in the melt reservoir may be kept at a relatively stable level irrespective of the variations in the melt flow to the reservoir. Adjustment of the size of the opening also gives an opportunity to adjust the fed amount of melt to the other fiberising parameters of the fiberising apparatus:

It is also advantageous to be able to enlarge the opening of the melt reservoir in case mineral melt is solidified around the opening, whereby the melt flow can be kept constant by enlarging the opening of the melt reservoir. A change in the position of the adjustment means may also cause the formed solidification, which has formed at the opening, to come loose, whereby the opening regains its original size and shape.

According to an embodiment the adjustment means may comprise for example a slide construction, which has a slide wherein has been arranged a slot opening. The adjustment means may be arranged so that the slide covers a part of the feed hole, which has been arranged in the second end of the melt reservoir. Thus the size of the opening of the melt reservoir is determined by how much the slot opening of the melt reservoir and the feed hole overlap each other. When the opening of the melt reservoir is at the smallest, its size completely or almost completely corresponds to the size of the slot opening, and the adjustment means has been arranged in its first position. When the size of the opening is at the largest, the size of the opening is determined mostly by the size of the feed hole, and the adjustment means has been arranged in its second position.

In practice the adjustment means comprises one or two slides, of which both or either one may be arranged to be movable. The slide is usually moved in a horizontal direction between two extreme positions, i.e. the first and second position described above. If the adjustment means comprises two slides a slot opening may be arranged in one of them or in both of them. The adjustment means is usually arranged in the second end of the melt reservoir on the outside of the melt reservoir, in contact with the bottom part of the melt reservoir. In the bottom part of the melt reservoir may be arranged for example guide grooves or the like, in which are arranged guiding means of the adjustment means, such as guiding wheels, pegs or the like, so that the adjustment means may be moved between the first and the second position. The guiding means may be made up of for example screws, the ends of which have been arranged to move along the guide grooves. The guide grooves may as well be arranged in the adjustment means, in which case guiding means are arranged in the melt reservoir.

The adjustment means are arranged in functional connection with a power unit, with which the adjustment means may be moved so that the opening of the melt reservoir is reduced or enlarged. An actuator or an equivalent motor unit may function as a power unit, or the power unit may be used manually.

The adjustment means may be manufactured of metal or ceramics. If the adjustment means is made of metal, it is preferably cooled using a cooling medium, such as circulating water. Channels or ducts for circulating the cooling medium may be arranged in the adjustment means.

According to the present invention a monitoring means is arranged above the open part of the first end of the melt reservoir for monitoring the melt level in the melt reservoir. The monitoring means preferably monitors the melt level continuously and the information obtained about the melt level may be used for example for adjusting the size of the opening using the above-mentioned adjustment means. An allowed variation interval is defined for the melt level in the melt reservoir and if the monitoring means observes that the melt level in the melt reservoir is changed outside this interval the size of the opening may be adjusted either manually or automatically. The adjustment means is then controlled based on the change in the melt level, whereby the monitoring means is preferably arranged in a functional connection with the adjustment means for automatic adjusting of the size of the opening or it may be arranged to release a warning signal to process operators for manual changing of the size of the opening. If for example the melt level in the melt reservoir rises over the variation interval's allowed maximum level the opening is automatically enlarged based on a control signal, which the adjustment means receives from the monitoring means. Typically the monitoring means has been arranged at a suitable distance from the first end of the melt reservoir, for example at a distance of 0.1-5, typically at a distance of 1-3, more typically at a distance of 1.5-2.5 m above the open part of the first end of the melt reservoir.

The monitoring means monitors the melt level without contact and the monitoring may be handled optically, thermally or in another corresponding manner. According to one preferable embodiment a Frequency Modulated Continuous Wave radar (FWCW radar) is used as the monitoring means. The FWCW radar uses frequency modulated signals for the measuring. The radar emits a so-called radar sweep, which sweeps over certain determined frequencies. The emitted sweep is reflected from the surface which is monitored, whereby the reflected sweep is detected by the receiver of the radar. The reflected sweep has a delay, which is proportional to the distance to the reflecting surface. A FWCW radar uses the frequency differences between the detected and the emitted signals, which is related to the delay and thus the distance. By using a suitable low-pass filter and Fourier transformation the distance to the melt surface, wherefrom the radar signal has been reflected, may easily be calculated.

According to an embodiment of the present invention the melt reservoir may be in contact with weighing means and its weight is continuously monitored. Then the size adjustment of the opening of the melt reservoir may be arranged based on the observed weight change.

Sometimes disturbances may occur in the melt flow from the melting furnace, whereby too much melt is led to the melt reservoir. In the first end of the melt reservoir in the wall of the melt reservoir may be arranged an opening for overflow, through which overflowing melt is led out of the melt reservoir. The overflow opening may also be used when it is desired to temporarily reduce the fibre formation without changing the process conditions in the melting furnace. In that case the feed hole of the melt reservoir may be minimised using the adjustment means, and the melt is led through the overflow opening out of the melt reservoir. The process conditions in the melting furnace do not need to be changed and the melting process does not need to be interrupted, which makes the adjustment of the entire fibre manufacturing process easier.

The overflow opening may also be used for removing small coke pieces which may appear in the melt. The removal takes place easily by allowing the melt to run out of the melt reservoir through the overflow opening during a certain amount of time. The overflow opening may also be used to even out melt pulses which may sometimes occur. Then a larger amount of melt than was planned comes from the melting furnace to the melt reservoir during a certain amount of time. The excess melt may be allowed to run out of the melt reservoir through the overflow opening, and the effect of the melt pulse on the fiberising conditions in the fiberising apparatus may be minimised.

According to an embodiment the apparatus comprises a leading means for leading mineral melt from the melting furnace to the first end of the melt reservoir. The leading means may for example be an open V-shaped trough, which leads the melt from the melting furnace to the melt reservoir. The leading means may have been arranged to unite to the first end of the melt reservoir, preferably with a fixed contact, so that the apparatus is in the shape of a reversed L. The length of the leading means may be 0.1-10 m, typically 0.5-5 m, more typically 0.75-3 m. The leading means may also be arranged connected to the melting furnace.

According to one preferred embodiment a separating device for solid pieces may be arranged to the leading means. The separating device may be used for example for removing unburned coke pieces, which sometimes emerge from the melting furnace together with the mineral melt. If the coke pieces are not removed, they may cause holes in the finished product by burning away the surrounding binder or otherwise harm the quality of the finished product and obstruct the opening of the melt reservoir.

According to one embodiment solid pieces are removed from a flow of mineral melt so that mineral melt is led out of the melting furnace through an opening, the mineral melt is transported using a leading means, such as a melt trough, to a fiberising apparatus, and the mineral melt is led from the melting furnace first to a separating device, which separates solid pieces from the mineral melt, before it is led to the leading means. The apparatus for removing solid pieces from mineral melt may comprise an elongated open leading means, along which mineral melt is led from a melting furnace to a fiberising apparatus in the longitudinal direction of the leading means, and a separating device in the form of a trough, the longitudinal direction of which coincides with the longitudinal direction of the leading means and wherein has been arranged a slit in the longitudinal direction of the trough, whereby the separating device has been arranged so that the melt from the melting furnace is led first to the separating device before it is led to the leading means.

In this context an open leading means and an open separating device mean that both these construction elements are situated outside the melting furnace. Usually they are both in the shape of open troughs, along the bottom parts of which the melt is led from one place to the next.

Solid pieces, such as unburned coke pieces, may easily and simply be separated from the mineral melt by leading the melt flow from the melting furnace through the slit of a separating device before it is led to a leading means, which leads the melt to a fiberising apparatus. The separating device may easily be shaped as a trough, wherein a slit has been arranged in the longitudinal direction of the trough, which direction usually coincides with the flow direction of the melt in the separating device. When mineral melt is fed into the separating device, the melt flows through the slit to the leading means, wherefrom the melt is then led along the leading means to the fiberising apparatus. Solid pieces, which possibly emerge from the melting furnace, get stuck in the separating device if they do not fit through the opening of the slit. In this manner solid pieces above a certain size may quickly and effectively be separated from the mineral melt.

The mineral melt is thus taken out from the melting furnace through an opening to a separating device, which is open to the environment substantially along its entire length. The separating device is placed on an open leading means so that the longitudinal directions of the separating device and the leading means coincide with each other. The length of the separating device is at least 20 % of the length of the leading means, typically at least 30 %, more typically at least 35 %, preferably at least 40 %, more preferably at least 55 %, more preferred at least 60 %, more preferably at least 65 % of the length of the leading means. The length of the separating device is however usually shorter than the length of the leading means, but they can also be of the same length. The mineral melt runs along the separating device and through its slit to the leading means, along which leading means the melt runs to a separate fiberising apparatus.

The separating device is elongated and its length coincides with the flow direction of the melt and the longitudinal direction of the leading means. The shape of the separating device can be chosen freely, it can for example be U-shaped. According to an embodiment of the present invention the separating device comprises a first and a second wall, which have been arranged in a V-shape in an angular relationship to each other. If the separating device is arranged in a V-shape, the angle between the first and the second wall is normally 20-160°, typically 45-140°, more typically 90-120°. The walls of the separating device usually comprise solid flat surfaces, which are free from holes.

The slit may naturally be arranged freely in the lower part of the separating device, as long as the melt can flow out through the slit without the separating device becoming too full with melt. In other words the slit does not need to be arranged in the middle of the separating device, on its centre line, but it can also be placed on either of the separating device's side walls. The separating device can also have more than one slit. A V-shaped separating device can for example have two slits, one in the first wall and one in the second wall. In a V-shaped separating device the slit is advantageously arranged between the first and the second wall in the tip of the V.

The width of the slit may be selected on the basis of how large the pieces are that one wishes to separate from the mineral melt. The narrower the slit, the smaller the solid pieces are that get stuck in the separating device, since they do not fit through the slit. Usually the width of the slit, i.e. the size of its opening, is at least 5 mm, typically 5-50 mm, more typically 15-25 mm. The slit is shaped as a uniform elongated opening in the trough that makes up the separating device, i.e. the slit does not comprise a number of holes or other such individual openings.

The separating device may be manufactured from ceramics or metal, such as stainless or black steel. It is preferably not necessary to manufacture the separating device of noble metal, such as platinum or rhodium. It is possible to arrange the separating device to be cooled drown, for example by arranging coolant channels in its walls. In these coolant channels a cooling medium, such as water, may then be circulated, which keeps the temperature of the separating device at a desired level. The length of the separating device in the transport direction of the melt is usually more than 100 mm, typically 300-1500 mm, more typically 700-1000 mm.

The separating device may be arranged on a leading means, such as a melt trough, with the aid of a fastening means. The first end of the fastening means may be fastened to one of the walls of the separating device and the second end may be arranged on a support structure, which is arranged next to the leading means. The separating device may comprise two or three fastening means, which have been fastened to one side of the separating device at a distance from each other in the longitudinal direction of the separating device. On the second opposite wall of the separating device support means may be fastened, which rest on a support structure to give stability to the separating device when it has been arranged on the leading means. Support structures may be fastened to the side of the leading means.

The fastening means may be jointed, so that the separating device may be arranged to be pivotable around a pivot axis in the joint of the fastening means. Another possibility is that the second end of the fastening means is arranged to be rotatable around the support structure, whereby a pivot axis is formed through the second end of the fastening means. By arranging the separating device to be pivotable, the solid pieces collected in the separating device may easily be emptied. The emptying may be done manually with the aid of a lever arm or a compressed-air cylinder. The emptying may also be automated so that the separating device is emptied at even predetermined intervals.

The described invention relates to melt feed in the manufacture of mineral fibres, where mineral melt is fed to a fiberising apparatus of cascade type. The fiberising apparatus usually comprises a series of rotating fiberising or spinning rotors, typically 3-4 rotors. The rotors usually rotate around a horizontal axis. Mineral melt from the melting furnace is directed toward the mantle surface of the first rotor where it gets a certain hold of the rotor's mantle surface before it is thrown out as a cascade of drops towards the mantle surface of the adjacent second rotor in the series. A part of the mineral melt then gets sufficient hold of the mantle surface of the second rotor in order to be formed into fibres due to the effect of the centrifugal force. Another part of the mineral melt is thrown onwards towards the mantle surface of the third rotor. In this way the mineral melt is "transported" as a jet of melt drops or a drop cascade, successively from one rotor to the subsequent one through the whole fiberising apparatus, while a part of the mineral melt is formed into mineral fibres. A binder may be applied on the formed mineral fibres, either during the fibre formation or after it. The mineral fibres formed at the fiberising rotors are transported away from the fiberising apparatus by means of blowing off. The blowing off of mineral fibres may be arranged by so-called primary blow-off means, which have been placed at the peripheries of the rotors or with secondary blow-off means, which have been arranged at a distance from the fiberising apparatus. The mineral fibres are transported from the fiberising apparatus through a collecting chamber towards a collecting member, which has been arranged in front of the fiberising apparatus. The collecting member may be, for example, a belt conveyor or a rotating drum.

Some embodiments of the invention are described in more detail below with reference to the enclosed figures, in which
- Figure 1: shows schematically a melt reservoir with an adjustment means according to an embodiment of the present invention, seen from the side,
- Figure 2: shows schematically an adjustment means according to another embodiment of the present invention, seen in the vertical direction,
- Figure 3: shows schematically a third embodiment of the present invention, seen from the side,
- Figure 4: shows schematically a separating device according to an embodiment of the present invention arranged on a leading means, seen from the side,
- Figure 5: shows schematically a separating device according to another embodiment of the present invention arranged on a leading means, seen from above; and
- Figure 6: shows schematically a separating device according to a third embodiment of the present invention arranged on a leading means, seen in the longitudinal direction of the separating device.

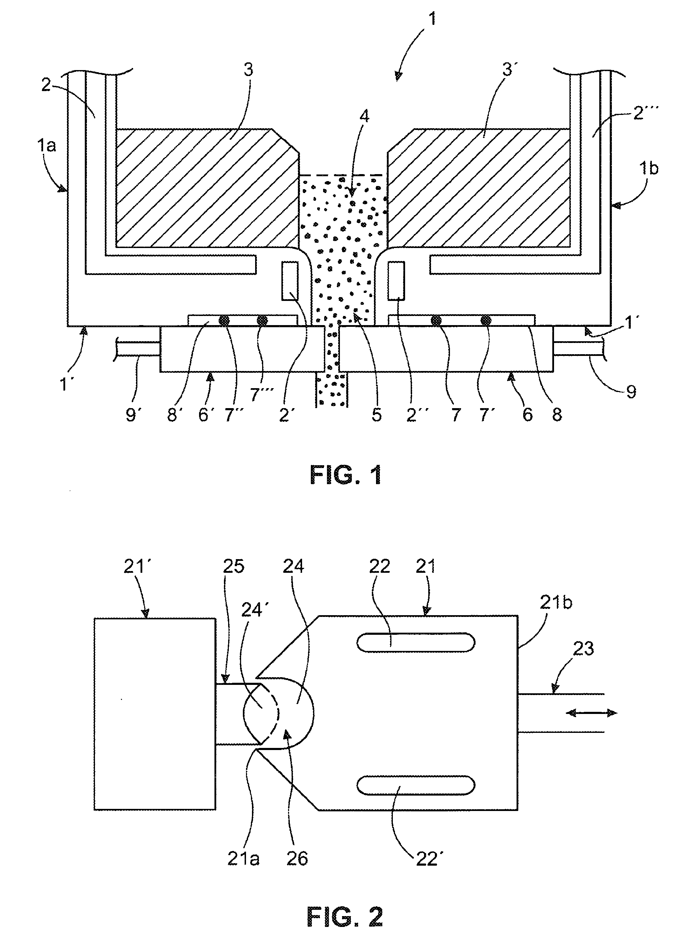

Figure 1 shows schematically a melt reservoir with an adjusting means according to an embodiment of the present invention, seen from the side. The melt reservoir 1 comprises a bottom part 1' and walls 1 a and 1 b. In the walls 1a, 1b and the bottom part 1' has been arranged cooling channels 2, 2', 2", 2'" wherein the cooling medium, such as water, is arranged to circulate to keep the melt reservoir 1 cooled during feed of mineral melt 4. On the inside of the melt reservoir 1 has been arranged fireproof brick tiles or ceramic plates 3, 3' for protecting the walls 1 a, 1b of the melt reservoir from mineral melt 4. The feed hole 5 has been arranged through the bottom part 1' of the melt reservoir 1. The mineral melt 4 fills a part of the melt reservoir 1, but still so that the feed hole 5 is completely filled with the melt 4 so that no air can be fed through it.

On the outside of the bottom part 1' of the melt reservoir 1 has been arranged adjustment means 6, 6' with which the size of the opening of the melt reservoir is adjusted. The adjustment means 6, 6' have been arranged to be movable. Both the adjustment means 6, 6' comprise guiding means 7, 7', 7", 7'" which have been arranged in guide grooves 8, 8' arranged in the bottom part 1' of the melt reservoir 1. When the adjustment means 6, 6' are moved, the guiding means 7, 7', 7", 7"' are moved along the guide grooves 8, 8'. The adjustment means comprise connecting means 9, 9' with which they are connected to the power unit, which may be operated manually or with the aid of motor power move the adjustment means 6, 6'.

Slot openings, which are not shown in the figure, have been arranged in the adjustment means 6, 6'. A closer description of slot openings may be found in figure 2. These slot openings determine the size of the opening of the melt reservoir 1.

Figure 2 shows schematically adjustment means according to an embodiment of the present invention, seen in the vertical direction. According to this embodiment the adjustment means 21, 21' comprise a first part 21, which is arranged movable in a bottom part of a melt reservoir. The first part comprises guide grooves 22, 22' wherein guiding means, such as screw ends, may be arranged. The guiding means may simultaneously function as fastening means, i.e. they can fasten the first part 21 to the bottom part of the melt reservoir. The first part also comprises a connecting part 23, with which the first part is in contact with the power unit, which moves the first part 21. The connecting part 23 is attached to the second end 21 b of the first part 21. In this embodiment the second part 21' of the adjustment means is arranged immobile, i.e. it is fastened to the bottom part of the melt reservoir in such a way that it may not be moved. The fastening may be done using suitable fastening means, e.g. screws.

Both the first and the second part 21, 21' have a slot opening 24, 24'. In the first part 21 the slot opening 24 has been arranged as a U-shaped incision in the first end 21a of the first part 21. In the second part 21' has been arranged a protrusion 25, wherein a U-shaped slot opening 24' has been arranged. The width of the protrusion 25 may preferably be arranged so that the protrusion 25 fits precisely into the slot opening 24 of the first part 21.

The opening 26 of the melt reservoir is defined by the slot openings 24, 24' and their mutual relationship. Figure 2 shows an adjustment means in a position where the size of the opening 26 is at the largest, in other words the first part 24 of the adjustment means is moved to its extreme second position, and the area of the opening 26, which is defined by the slot openings of the first and second part, is at the largest. Figure 2 also shows with a dashed line the area of the opening 26, when it is at the smallest, in other words when the first part 24 of the adjustment means is moved to its extreme first position.

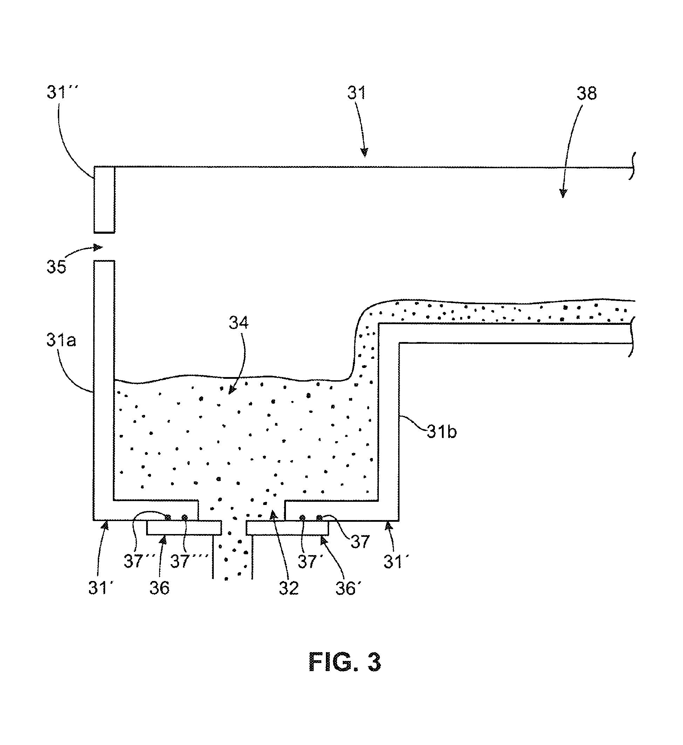

Figure 3 shows schematically a third embodiment of the present invention, seen from the side. The melt reservoir 31 comprises a bottom part 31' and walls 31 a and 31 b. The feed hole 32 has been arranged through the bottom part 31' of the melt reservoir 31. The mineral melt 34 fills a part of the melt reservoir 31. On the outside of the bottom part 31' of the melt reservoir 31 has been arranged adjustment means 36, 36' with which the size of the opening 33 of the melt reservoir is adjusted. The adjustment means 36, 36' have been arranged movable and they comprise guiding means 37, 37', 37", 37"', which have been arranged in guide grooves in the bottom part 31' of the melt reservoir 31.

Mineral melt 34 is led to the melt reservoir 31 along a leading means 38, which has been arranged to be united as an open trough to the first end 31" of the melt reservoir 31. The melt reservoir 31 also has an opening 35 for overflow, which has been arranged in the wall 31a in the first end 31" of the melt reservoir 31. Through this opening 35 the melt 34 may run out from the melt reservoir 31 in case the opening is reduced or if the leading means 38 leads too much melt 34 to the melt reservoir 31 for example due to a process disturbance.

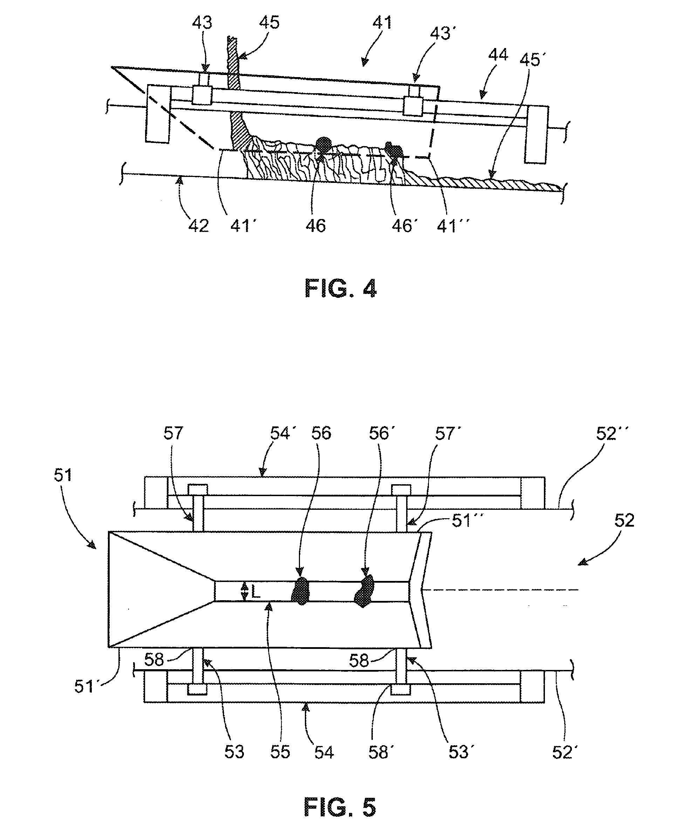

Figure 4 shows a separating device according to an embodiment of the present invention arranged on a leading means, seen from the side. The separating device 41 has been arranged on a leading means 42 with the aid of fastening means 43, 43', which are arranged around a support structure 44. The support structure is fastened to the side of the leading means 42. The mineral melt 45 is led from a melting furnace (not shown) to the separating device 41. The melt 45 runs through a gap, which has been arranged in the lower part of the separating device 41. Solid pieces 46, 46', which are larger than the opening of the gap, get stuck in the separating device 41 and are separated from the mineral melt which passes through the gap. The "purified" melt 45' is then transported onwards by the leading means 42. The separating device 41' may be arranged on the leading means so that its first end 41' is on a higher level than its second end 41", i.e. the separating device is inclined in the flow direction of the melt.

Figure 5 shows a separating device according to another embodiment of the present invention arranged on a leading means, seen from above. The separating device 51 has been arranged on a leading means 52 with the aid of fastening means 53, 53', which are fastened at their first end 58 to the first wall 51' of the separating device and arranged at their second end 58' around a support structure 54. The support structure is fastened to the side of the leading means 52, to its first wall 52'. A gap 55 has been arranged between the walls 51', 51" of the separating device, through which gap the mineral melt is led. Solid pieces 56, 56', which are larger than the opening L of the gap, get stuck in the separating device 51 and are separated from the mineral melt which passes through the gap.

A support means 57, 57', which takes support against another support structure 54', has been arranged to the second wall 51" of the separating device 51. This support structure 54' is fastened to the second wall 52" of the leading means 52.

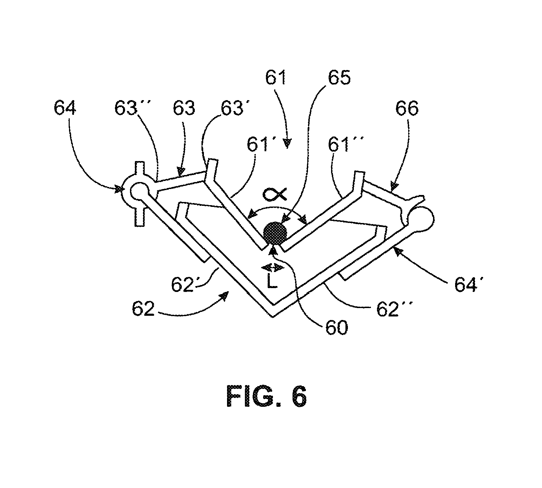

Figure 6 shows a separating device according to a third embodiment of the present invention arranged on a leading means, seen in the longitudinal direction of the separating device. The separating device 61 comprises the first and the second wall 61', 61", which have been arranged against each other in an angle α. A slit 60 has been arranged in the point of contact of the walls 61', 61". Solid pieces, which are larger than the width L of the slit 60, do not fit through the slit but will remain in the separating device 61.

The separating device 61 has been arranged on the leading means 62 with the aid of fastening means 63. The fastening means 63 is fastened at its first end 63' to the first wall 61' of the separating device 61. The second end 63" of the fastening means 63 has been arranged around a support structure 64, which is fastened to the first wall 62' of the leading means 62. The fastening means 63 may rotate around the support structure 64, whereby the separating device 61 is pivoted around the pivot axis formed in the second end 63" of the fastening means 63. At the time of pivoting the separating device 61 is moved to the side of the leading means 62 and turned upside down. Then the solid piece 65 collected by the separating device falls out from the separating device 61 and the separating device becomes empty. After the emptying the separating device 61 may be returned back onto the leading means 62.

A support means 66, which takes support against another support structure 64', has been arranged to the second wall 61" of the separating device 61. This support structure 64' is fastened to the second wall 62" of the leading means 62.

## Claims

1. Apparatus for the manufacture of mineral fibres, where mineral melt is fed to a fiberising apparatus of cascade type, the apparatus comprising
- a melting furnace and
- a melt reservoir (1), which has
- a first and a second end at a vertical distance from each other, whereby the first end is at least partly open to the environment,
- walls (1a, 1b) which extend between the first and the second end and limit the volume of the melt reservoir (1),
- a feed hole (5) which has been arranged in the second end, in the bottom (1') of the melt reserves (1), and through which hole the mineral melt is led out from the melt reservoir (1) and which forms the opening of the melt reservoir (1),
**characterised in that** the apparatus comprises
- monitoring means, which has been arranged above the open part of the first end of the melt reservoir for monitoring the melt level in the melt reservoir, and
- adjustment means (6,6') for adjusting the size of the opening of the melt reservoir (1) based on a change in the melt level for obtaining a stable feed of mineral melt.

2. Apparatus according to claim 1, **characterised in that** the apparatus comprises a leading means for leading mineral melt from the melting furnace to the first end of the melt reservoir.

3. Apparatus according to claim 2, **characterised in that** the leading means has been arranged as an open trough, which is united to the first end of the melt reservoir.

4. Apparatus according to claim 3, **characterised in that** a separating device for solid pieces has been arranged to the leading means, which separating device comprises a trough, the longitudinal direction of which coincides with the longitudinal direction of the leading means and wherein has been arranged a slit in the longitudinal direction of the trough, whereby the separating device has been arranged so that the melt from the melting furnace is led first to the separating device before it is led to the leading means.

5. Apparatus according to claim 4, **characterised in that** a separating device for solid pieces has been arranged to the leading means, which separating device comprises
- a first and a second wall, which have been arranged in a V-shape in an angular relationship to each other, and
- a slit, which has been arranged between the first and the second wall in the tip of the V.

6. Apparatus according to any of the claims 1-5, **characterised in that** an opening for overflow has been arranged in the wall of the melt reservoir in the first end of the melt reservoir.

7. Method for the manufacture of mineral fibres, where mineral melt is fed to a fiberising apparatus of cascade type, wherein
- mineral melt is led out from the melting furnace,
- mineral melt is led to a melt reservoir (1), to the first end of the melt reservoir, which is at least partly open to the environment, so that the melt reservoir contains a certain amount of melt during feeding,
- mineral melt is led out from the melt reservoir (1) through a feed hole (5) which forms the opening of the melt reservoir and which has been arranged in the second end of the melt reservoir, so that substantially no air is led out through the feed hose (5) of the melt reservoir simultaneously with the melt, whereby mineral melt is led out from the melt reservoir through a feed hole in the bottom (1') of the melt reservoir,
- mineral melt is led from the melt reservoir to a fiberising apparatus of cascade type,
**characterised in**
- monitoring melt level in the melt reservoir by using a monitoring means, which has been arranged above the open part of the first end of the melt reservoir, and
- adjusting the size of the melt reservoir's opening by using adjustment means (6,6') for obtaining a stable feed of mineral melt.

8. Method according to claim 7, **characterised in that** the mineral melt is led to the melt reservoir using an open trough, which is united to the first end of the melt reservoir.

9. Method according to claim 7 or 8, **characterised in that** solid pieces are separated from the mineral melt led to the melt reservoir in a separating device by leading mineral melt through a slit arranged in the longitudinal direction of the leading means, whereby solid pieces which do not fit through the opening of the slit remain in the separating device and purified mineral melt is led to the leading means.

10. Method according to any of the preceding claims, **characterised in that** the overflow of mineral melt is drained from the melt reservoir using an opening, which has been arranged in the wall of the melt reservoir in its first end.

11. Method according to any of the preceding claims, **characterised in that** the opening of the melt reservoir is substantially filled with mineral melt during the feeding of melt from the melt reservoir.

## Patentansprüche

1. Vorrichtung zur Herstellung von Mineralfasern, wobei Mineralschmelze in eine Zerfaserungsvorrichtung vom Kaskadentyp eingespeist wird, wobei die Vorrichtung aufweist
- einen Schmelzofen und
- einen Schmelzebehälter (1), der aufweist
- ein erstes und ein zweites Ende in senkrechtem Abstand zueinander, wobei das erste Ende zumindest teilweise in die Umgebung offen ist,
- Wände (1a, 1b), die sich zwischen dem ersten und dem zweiten Ende erstrecken und das Volumen des Schmelzebehälters (1) begrenzen;
- ein Zufuhrloch (5), das am zweiten Ende am Boden (1') des Schmelzebehälters (1) angeordnet ist und durch welches Loch die Mineralschmelze aus dem Schmelzebehälter (1) heraus geführt wird und das die Öffnung des Schmelzebehälters (1) bildet;
**dadurch gekennzeichnet, dass** die Vorrichtung aufweist
- eine Überwachungseinrichtung, die über dem offenen Teil des ersten Endes des Schmelzebehälters angeordnet ist, um den Schmelzepegel im Schmelzebehälter zu überwachen, und
- eine Einstelleinrichtung (6, 6') zum Einstellen der Größe der Öffnung des Schmelzebehälters (1) basierend auf einer Änderung des Schmelzepegels, um eine gleichbleibende Zufuhr von Mineralschmelze zu erhalten.

2. Vorrichtung nach Anspruch 1, **dadurch gekennzeichnet, dass** die Vorrichtung eine Führungseinrichtung zum Führen von Mineralschmelze vom Schmelzofen zum ersten Ende des Schmelzebehälters aufweist.

3. Vorrichtung nach Anspruch 2, **dadurch gekennzeichnet, dass** die Führungseinrichtung als eine offene Rinne eingerichtet ist, die mit dem ersten Ende des Schmelzebehälters verbunden ist.

4. Vorrichtung nach Anspruch 3, **dadurch gekennzeichnet, dass** eine Trennvorrichtung für Festkörper an der Führungseinrichtung angeordnet ist, welche Trennvorrichtung eine Rinne aufweist, deren Längsrichtung mit der Längsrichtung der Führungseinrichtung zusammenfällt, und wobei ein Schlitz in der Längsrichtung der Rinne angeordnet ist, wobei die Trennvorrichtung so angeordnet ist, dass die Schmelze vom Schmelzofen zuerst zur Trennvorrichtung geführt wird, ehe sie zur Führungseinrichtung geführt wird.

5. Vorrichtung nach Anspruch 4, **dadurch gekennzeichnet, dass** eine Trennvorrichtung für Festkörper an der Führungseinrichtung angeordnet ist, welche Trennvorrichtung aufweist
- eine erste und eine zweite Wand, die V-förmig in einer Winkelbeziehung zueinander angeordnet sind, und
- einen Schlitz, der zwischen der ersten und der zweiten Wand in der Spitze des V angeordnet ist.

6. Vorrichtung nach einem der Ansprüche 1-5, **dadurch gekennzeichnet, dass** eine Überlauföffnung in der Wand des Schmelzebehälters am ersten Ende des Schmelzebehälters angeordnet ist.

7. Verfahren zur Herstellung von Mineralfasern, wobei Mineralschmelze einer Zerfaserungsvorrichtung vom Kaskade-Typ zugeführt wird, wobei
- Mineralschmelze aus dem Schmelzofen geführt wird,
- Mineralschmelze zu einem Schmelzebehälter (1) zum ersten Ende des Schmelzebehälters geführt wird, das zumindest teilweise in die Umgebung offen ist, so dass der Schmelzebehälter während der Zufuhr eine bestimmte Menge von Schmelze enthält,
- Mineralschmelze aus dem Schmelzebehälter (1) durch ein Zufuhrloch (5) geführt wird, das die Öffnung des Schmelzebehälters bildet und am zweiten Ende des Schmelzebehälters angeordnet ist, so dass im Wesentlichen keine Luft durch das Zufuhrloch (5) des Schmelzebehälters gleichzeitig mit der Schmelze hinaus geführt wird, wobei Mineralschmelze aus dem Schmelzebehälter durch ein Zufuhrloch im Boden (1') des Schmelzebehälters hinaus geführt wird,
- Mineralschmelze vom Schmelzebehälter zu einer Zerfaserungsvorrichtung vom Kaskade-Typ geführt wird,
**gekennzeichnet durch**
- Überwachen des Schmelzepegels im Schmelzebehälter unter Verwendung einer Überwachungseinrichtung, die über dem offenen Teil des ersten Endes des Schmelzebehälters angeordnet ist, und
- Einstellen der Größe der Öffnung des Schmelzebehälters basierend auf einer Änderung des Schmelzepegels **durch** Verwendung der Einstelleinrichtung (6, 6') zum Erhalt einer gleichbleibenden Zufuhr von Mineralschmelze.

8. Verfahren nach Anspruch 7, **dadurch gekennzeichnet, dass** die Mineralschmelze unter Verwendung einer offenen Rinne zum Schmelzebehälter geführt wird, die mit dem ersten Ende des Schmelzebehälters verbunden ist.

9. Verfahren nach Anspruch 7 oder 8, **dadurch gekennzeichnet, dass** Festkörper von der zum Schmelzebehälter geführten Mineralschmelze in einer Trennvorrichtung durch Führen der Mineralschmelze durch einen Schlitz getrennt werden, der in der Längsrichtung der Führungseinrichtung angeordnet ist, wodurch Festkörper, die nicht durch die Öffnung des Schlitzes passen, in der Trennvorrichtung bleiben und gereinigte Mineralschmelze zur Führungseinrichtung geführt wird.

10. Verfahren nach einem der vorhergehenden Ansprüche, **dadurch gekennzeichnet, dass** der Überlauf von Mineralschmelze vom Schmelzebehälter unter Verwendung einer Öffnung abgezogen wird, die in der Wand des Schmelzebehälters in seinem ersten Ende angeordnet ist.

11. Verfahren nach einem der vorhergehenden Ansprüche, **dadurch gekennzeichnet, dass** die Öffnung des Schmelzebehälters während der Zufuhr von Schmelze vom Schmelzebehälter im Wesentlichen mit Mineralschmelze gefüllt ist.

## Revendications

1. Appareil pour la fabrication de fibres minérales, où une coulée minérale est fournie à un appareil de fibrage du type en cascade, l'appareil comprenant
- un four de fusion et
- un réservoir de coulée (1) qui a
- une première et une seconde extrémités à une distance verticale l'une par rapport à l'autre, où la première extrémité est au moins partiellement ouverte sur l'environnement,
- des parois (1a, 1b) qui s'étendent entre la première et la seconde extrémités et limitent le volume du réservoir de coulée (1),
- un trou d'alimentation (5) qui a été ménagé dans la seconde extrémité, dans le fond (1') du réservoir de coulée (1), trou par lequel la coulée minérale est évacuée du réservoir de coulée (1) et qui forme l'ouverture du réservoir de coulée (1),
**caractérisé en ce que** l'appareil comprend
- des moyens de contrôle qui ont été agencés au-dessus de la partie ouverte de la première extrémité du réservoir de coulée, pour contrôler le niveau de coulée dans le réservoir de coulée, et
- des moyens de réglage (6, 6') pour ajuster la dimension de l'ouverture du réservoir de coulée (1) en se basant sur un changement du niveau de coulée, pour obtenir une alimentation stable de la coulée minérale.

2. Appareil selon la revendication 1, **caractérisé en ce que** l'appareil comprend un moyen directeur pour guider la coulée minérale depuis le four de fusion jusqu'à la première extrémité du réservoir de coulée.

3. Appareil selon la revendication 2, **caractérisé en ce que** le moyen directeur a été agencé comme une goulotte ouverte qui est reliée à la première extrémité du réservoir de coulée.

4. Appareil selon la revendication 3, **caractérisé en ce qu'**un dispositif séparateur, pour des pièces solides, a été agencé sur le moyen directeur, lequel dispositif séparateur comprend une goulotte dont la direction longitudinale coïncide avec la direction longitudinale du moyen directeur, dispositif séparateur dans lequel a été ménagée une fente suivant la direction longitudinale de la goulotte, où le dispositif séparateur a été agencé de manière telle, que la coulée provenant du four de fusion soit guidée d'abord jusqu'au dispositif séparateur, avant d'être guidée jusqu'au moyen directeur.

5. Appareil selon la revendication 4, **caractérisé en ce qu'**un dispositif séparateur, pour des pièces solides, a été agencé sur le moyen directeur, lequel dispositif séparateur comprend
- une première et une seconde parois qui ont été agencées en forme de V, en formant un angle l'une par rapport à l'autre, et
- une fente qui a été ménagée entre la première et la seconde parois, dans la pointe du V.

6. Appareil selon l'une quelconque des revendications 1 à 5, **caractérisé en ce qu'**une ouverture de trop-plein a été ménagée dans la paroi du réservoir de coulée, au niveau de la première extrémité du réservoir de coulée.

7. Procédé de fabrication de fibres minérales, où une coulée minérale est fournie à un appareil de fibrage du type en cascade dans lequel
- une coulée minérale est évacuée du four de fusion,
- une coulée minérale est guidée jusqu'à un réservoir de coulée (1), jusqu'à la première extrémité du réservoir de coulée, première extrémité qui est au moins partiellement ouverte sur l'environnement, de sorte que le réservoir de coulée contient une certaine quantité de coulée au cours de l'alimentation,
- une coulée minérale est évacuée du réservoir de coulée (1), à travers un trou d'alimentation (5) qui forme l'ouverture du réservoir de coulée et qui a été agencé dans la seconde extrémité du réservoir de coulée, de sorte que de l'air ne s'échappe pratiquement pas du trou d'alimentation (5) du réservoir de coulée, en même temps que la coulée, où la coulée minérale est évacuée du réservoir de coulée par un trou d'alimentation situé dans le fond (1') du réservoir de coulée,
- la coulée minérale est guidée depuis le réservoir de coulée jusqu'à un appareil de fibrage du type en cascade,
**caractérisé par** des étapes consistant
- à contrôler le niveau de coulée dans le réservoir de coulée, en utilisant des moyens de contrôle qui ont été agencés au-dessus de la partie ouverte de la première extrémité du réservoir de coulée, et
- à ajuster la taille de l'ouverture du réservoir de coulée en se basant sur un changement du niveau de coulée, en utilisant des moyens de réglage (6, 6') pour obtenir une alimentation stable de la coulée minérale.

8. Procédé selon la revendication 7, **caractérisé en ce que** la coulée minérale est guidée jusqu'au réservoir de coulée, en utilisant une goulotte ouverte qui est reliée à la première extrémité du réservoir de coulée.

9. Procédé selon la revendication 7 ou 8, **caractérisé en ce que** des pièces solides sont séparées, dans un dispositif séparateur, de la coulée minérale guidée jusqu'au réservoir de coulée, en faisant passer la coulée minérale à travers une fente ménagée suivant la direction longitudinale du moyen directeur, où des pièces solides qui ne passent pas à travers l'ouverture de la fente restent dans le dispositif séparateur, et une coulée minérale purifiée est guidée jusqu'au moyen directeur.

10. Procédé selon l'une quelconque des revendications précédentes, **caractérisé en ce que** le trop-plein d'une coulée minérale est évacué du réservoir de coulée, en utilisant une ouverture qui a été ménagée dans la paroi du réservoir de coulée, au niveau de sa première extrémité.

11. Procédé selon l'une quelconque des revendications précédentes, **caractérisé en ce que** l'ouverture du réservoir de coulée est pratiquement remplie de coulée minérale au cours de l'alimentation de coulée provenant du réservoir de coulée.
